(19) Europäisches Patentamt
European Patent Office
Office européen des brevets

(11) **EP 3 904 428 A1**

(12) **EUROPEAN PATENT APPLICATION**
published in accordance with Art. 153(4) EPC

(43) Date of publication:
**03.11.2021 Bulletin 2021/44**

(21) Application number: **19902824.2**

(22) Date of filing: **25.12.2019**

(51) Int Cl.:
***C08J 3/12*** *(2006.01)*     ***C08F 214/18*** *(2006.01)*

(86) International application number:
**PCT/JP2019/051019**

(87) International publication number:
**WO 2020/138239 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2018   JP 2018245705**
**17.09.2019   JP 2019168193**

(71) Applicant: **AGC INC.**
**Chiyoda-ku,**
**Tokyo 1008405 (JP)**

(72) Inventors:
• **HOSODA, Tomoya**
**Tokyo 100-8405 (JP)**
• **TAGUCHI, Daisuke**
**Tokyo 100-8405 (JP)**
• **SATO, Shuma**
**Tokyo 100-8405 (JP)**
• **OZAWA, Norio**
**Tokyo 100-8405 (JP)**

(74) Representative: **Müller-Boré & Partner**
**Patentanwälte PartG mbB**
**Friedenheimer Brücke 21**
**80639 München (DE)**

(54) **METHOD FOR PRODUCING PARTICLES AND METHOD FOR PRODUCING MOLDED OBJECT**

(57)     To provide a method for producing particles excellent in removability of low boiling components and capable of suppressing fibrillation even when pulverization treatment is carried out, and a method for producing molded product.

The method for producing particles of the present invention is a method of heat-treating particles A comprising a melt-moldable fluororesin at a temperature of at least the midpoint glass transition temperature and at most the extrapolated melting initiation temperature to obtain particles B comprising the above fluororesin.

EP 3 904 428 A1

**Description**

TECHNICAL FIELD

The present invention relates to a method for producing particles and a method for producing a molded product, comprising a fluororesin.

BACKGROUND ART

Fluororesins excellent in heat resistance, chemical resistance, weather resistance, etc., are used in various fields such as the semiconductor industry, automotive industry, and chemical industry. For example, if a powder consisting of particles comprising a fluororesin is coated on the surface of a substrate by a method such as an electrostatic coating method, fluid immersion method, rotational molding method, etc., it is possible to form a coating film excellent in protection of the substrate surface or chemical resistance.

In recent years, there has been a demand for a fluororesin in which the content of low boiling components is small. If the particles comprising a fluororesin contain a large amount of low boiling components, white smoke may be generated by evaporation of the low boiling components when the particles are used to produce a coating film or other molded products. For this reason, Patent Document 1 discloses a method of removing low boiling components contained in a fluororesin such as ETFE by controlling the melt volume flow rate of the fluororesin during melt kneading of the fluororesin by a twin-screw extruder.

PRIOR ART DOCUMENTS

PATENT DOCUMENTS

Patent Document 1: WO2017/209133

DISCLOSURE OF INVENTION

TECHNICAL PROBLEM

However, when the present inventors pulverized the fluororesin pellets obtained by the method described in Patent Document 1, fibrillated pulverized material was produced, and in some cases, it was impossible to obtain particles that could be used as powder. Therefore, there is a need for a method for producing particles comprising a fluororesin excellent in removability of low boiling components and having fibrillation suppressed even when the pulverization treatment is carried out.

The present invention has been made in consideration of the above problem, and aims to provide a method for producing particles and a method for producing a molded product, excellent in removability of low boiling components and capable of suppressing fibrillation even when pulverization treatment is carried out.

SOLUTION TO PROBLEM

As a result of an extensive study of the above problem, the inventors have found that if particles A comprising a melt-moldable fluororesin are heat-treated at a temperature of at least the midpoint glass transition temperature and at most the extrapolated melting initiation temperature, it is possible to suppress fibrillation even when pulverization treatment is carried out, while being excellent in removability of low boiling components, and thus have arrived at the present invention.

In other words, the inventors have found that the above problem can be solved by the following constructions.

[1] A method for producing particles, characterized by heat-treating particles A comprising a melt-moldable fluororesin at a temperature of at least the midpoint glass transition temperature and at most the extrapolated melting initiation temperature to obtain particles B comprising the fluororesin.

[2] The method for producing particles according to [1], characterized in that the temperature for the heat treatment is a temperature higher by at least 10°C than the midpoint glass transition temperature and lower by at least 10°C than the extrapolated melting initiation temperature.

[3] The method for producing particles according to [1] or [2], wherein the time for the heat treatment is from 30 minutes to 10 hours.

[4] The method for producing particles according to any one of [1] to [3], wherein the fluororesin is obtained by polymerizing a fluorinated monomer and a non-fluorinated monomer in the presence of a hydrofluorocarbon or hydrofluoroether.

[5] The method for producing particles according to [4], wherein the fluorinated monomer is at least one member selected from the group consisting of tetrafluoroethylene, hexafluoropropylene, perfluoro(alkyl vinyl ether), chlorotrifluoroethylene, vinylidene fluoride and vinyl fluoride, and

the non-fluorinated monomer is at least one member selected from the group consisting of ethylene, propylene, itaconic anhydride and vinyl acetate.

[6] The method for producing particles according to any one of [1] to [5], wherein the fluororesin is any of a copolymer containing units based on tetrafluoroethylene and units based on ethylene, a copolymer containing units based on chlorotrifluoroethylene and units based on ethylene, a copolymer containing units based on tetrafluoroethylene and units based on perfluoro(alkyl vinyl ether), and a copolymer containing units based on tetrafluoroethylene and units based on hexafluoropropylene.

[7] The method for producing particles according to any one of [1] to [6], wherein the fluororesin is a copolymer containing units based on tetrafluoroethylene and units based on ethylene, and the copolymer further contains monomer F1 represented by the following formula (F1):

$$CH_2=CX(CF_2)_nY \qquad (F1)$$

wherein X and Y are each independently a hydrogen atom or a fluorine atom, and n is an integer from 2 to 8.

[8] The method for producing particles according to any one of [1] to [7], wherein the average particle diameter of particles A is from 100 $\mu$m to 10.0 mm.

[9] The method for producing particles according to any one of [1] to [8], wherein particles A contain low boiling components, and the content of the low boiling components is more than 0 mass% and at most 0.5 mass% to the total mass of particles A.

[10] The method for producing particles according to [9], wherein the percentage reduction in low boiling components before and after heat treatment, calculated by the following formula by using the contents of low boiling components in particles A and particles B, is from 20 to 100%:

Percentage reduction in low boiling components before and after heat treatment [%] =

100 × (content of low boiling components in particles A - content of low boiling

components in particles B)/(content of low boiling components in particles A)

[11] The method for producing particles according to any one of [1] to [10], wherein particles B are subjected to pulverization treatment to obtain particles C.

[12] The method for producing particles according to [11], wherein the average particle diameter of particles C obtained by pulverization treatment of particles B is from 10 to 1,000 $\mu$m.

[13] The method for producing particles according to [11] or [12], wherein the apparent density of particles C obtained by pulverization treatment of particles B is from 0.3 to 1.2 g/cm3.

[14] A method for producing a molded product, characterized by melting the particles produced by the production method in any one of [1] to [13], at a temperature of at least the melting point of the fluororesin, to obtain a molded product containing the fluororesin.

ADVANTAGEOUS EFFECTS OF INVENTION

According to the present invention, it is possible to provide a method for producing particles and a method for producing a molded product, excellent in removability of low boiling components and capable of suppressing fibrillation even when pulverization treatment is carried out.

The mechanism by which the above effects of the invention are obtainable, is not necessarily clear, but it is thought to be partly due to the fact that by the removal of low boiling components, the fluororesin particles become denser, and fibrillation is suppressed.

DESCRIPTION OF EMBODIMENTS

The meanings of terms in this invention are as follows.

A numerical value range expressed by using " to " means a range that includes the numerical values indicated before and after" to " as the lower limit value and the upper limit value.

The term "melt moldable" means that the material exhibits melt flowability. The term "exhibits melt flowability" means that at a temperature higher by at least 20°C than the melting point of the resin under a load of 49 N, there exists a temperature at which the melt volume flow rate becomes to be from 0.1 to 1,000 g/10 min. The "melt volume flow rate" is meant for the melt mass flow rate (MFR) specified in JIS K7210:1999 (ISO 1133:1997).

Each of the midpoint glass temperature and the extrapolated melting initiation temperature is a value (°C) calculated in accordance with the method of JIS K7121 (1987), and is obtainable based on the DSC curve obtainable by the differential scanning calorimetry (DSC) method. Further, the midpoint glass temperature is also referred to as "$T_{mg}$", and the extrapolated melting initiation temperature is also referred to as "$T_{im}$".

A "unit" is a general term for an atomic group derived from one molecule of a monomer, which is directly formed by polymerization of the monomer, and an atomic group obtained by chemical conversion of a part of the above atomic group. In the following, where appropriate, units derived from an individual monomer will be referred to by the name having "units" attached to the monomer name.

The "average particle diameter of particles" is the median diameter on a volume basis, obtainable by measurement by using a laser diffraction scattering particle distribution measuring device.

The method for producing particles of the present invention is a production method which comprises heat-treating particles A comprising a melt-moldable fluororesin at a temperature of at least the midpoint glass transition temperature ($T_{mg}$) and at most the extrapolated melting initiation temperature ($T_{im}$) (hereinafter referred to as "specific heat treatment") to obtain particles B comprising the above fluororesin.

The method for producing particles of the present invention is excellent in removability of low boiling components. Although the details of the reason for this have not been clarified, it is assumed that when particles A are heat-treated at a temperature of at least $T_{mg}$, the molecular chain movement of the fluororesin is likely to occur, whereby the low boiling components can be sufficiently removed from particles A. Further, it is assumed that when particles A are heat-treated at a temperature of at most Tim, it is possible to suppress the fusion of particles to one another due to partial melting of the fluororesin, whereby the low boiling components can be sufficiently removed from the particles.

In addition, if particles A are heat-treated at a temperature of at most Tim, there will be a merit such that at the time of pulverization treatment of the obtainable particles B, the pulverization treatment will be easy, and it is possible to suppress the formation of fibrillated pulverized material.

[Particles A]

Particles A comprise a melt-moldable fluororesin (hereinafter referred to also as "specific fluororesin"). The specific fluororesin is preferably solid at room temperature (25°C).

The specific fluororesin is not particularly limited as long as it is melt-moldable, and it is possible to use any known fluororesin, but, from the standpoint of superior moldability, one having units based on a fluorinated monomer and units based on a non-fluorinated monomer, is preferred.

Specific examples of the fluorinated monomer may be tetrafluoroethylene (hereinafter referred to also as "TFE"), hexafluoropropylene (hereinafter referred to also as "HFP"), perfluoro(alkyl vinyl ether), chlorotrifluoroethylene (hereinafter referred to also as "CTFE"), vinylidene fluoride (hereinafter referred to also as "VdF") and vinyl fluoride. As the fluorinated monomer, one type may be used alone, or two or more types may be used in combination.

Specific examples of the non-fluorinated monomer may be ethylene, propylene, itaconic anhydride and vinyl acetate. As the non-fluorinated monomer, one type may be used alone, or two or more types may be used in combination.

Specific examples of the specific fluororesin may be a copolymer (ETFE) containing units based on TFE (hereinafter referred to also as "TFE units") and units based on ethylene (hereinafter referred to also as "E units"), a copolymer (ECTFE) containing units based on CTFE and units based on ethylene, a copolymer (PFA) containing TFE units and units based on perfluoro (alkyl vinyl ether) (hereinafter referred to as "perfluoroalkyl vinyl ether units") and a copolymer (FEP) containing units based on TFE and units based on hexafluoropropylene (hereinafter referred to as "hexafluoropropylene units"), and from the viewpoint of excellent moldability, ETFE and ECTFE are preferred, and ETFE is particularly preferred.

In ETFE, the proportion of the content of E units to the total content of E units and TFE units, is preferably from 20 to 70 mol%, more preferably from 25 to 60 mol%, particularly preferably from 35 to 55 mol%.

When the proportion of the content of E units is at least the lower limit value in the above range, mechanical strength will be excellent, and when the proportion is at most the upper limit value, chemical resistance will be excellent.

ETFE may be a copolymer consisting only of E units and TFE units, or it may contain at least one type of other monomer units other than these.

A preferred example of another monomer is monomer F1 represented by the following formula (F1).

$$CH_2=CX(CF_2)_nY \qquad (F1)$$

In the formula (F1), X and Y are each independently a hydrogen atom or a fluorine atom, and n is an integer from 2 to 8 (preferably 3 to 7, more preferably 4 to 6).

Specific examples of monomer F1 may be $CH_2=CF(CF_2)_nF$, $CH_2=CF(CF_2)_nH$, $CH_2=CH(CF_2)nF$, and $CH_2=CH(CF_2)nH$; $CH_2=CH(CF_2)nF$ is preferred; and $CH_2=CH(CF_2)_2F$ or $CH_2=CH(CF_2)_4F$ ((perfluorobutyl)ethylene, hereinafter referred to as PFBE) is more preferred.

In a case where ETFE contains other monomer units, the total content thereof is preferably from 0.1 to 10 moles, more preferably from 0.1 to 5 moles, particularly preferably from 0.2 to 4 moles in a molar ratio where the total of E units and TFE units is 100 moles. When the content of other monomer units is at least the lower limit value in the above range, the crack resistance will be good, and when the content is at most the upper limit value, the melting point of the fluororesin becomes to be lowered, whereby the moldability will be good.

In PFA, the proportion of the content of TFE units to the total content of TFE units and perfluoroalkyl vinyl ether units, is preferably from 9 to 99 mol%, more preferably from 80 to 99 mol%, particularly preferably from 90 to 99 mol%. PFA may be a copolymer consisting only of TFE units and perfluoroalkyl vinyl ether units, or it may contain at least one type of other monomer units other than these. A preferred example of another monomer is hexafluoropropylene. When other monomer units are contained, their content is preferably from 0.1 to 10 moles, more preferably from 0.1 to 6 moles, particularly preferably from 0.2 to 4 moles, in a molar ratio where the total of TFE units and perfluoroalkyl vinyl ether units is 100 moles.

In FEP, the proportion of the content of TFE units to the total content of TFE units and hexafluoropropylene units, is preferably from 70 to 99 mol%, more preferably from 80 to 99 mol%, particularly preferably from 90 to 99 mol%.

FEP may be a copolymer consisting only of TFE units and hexafluoropropylene units, or it may contain at least one type of other monomer units other than these. A preferred example of another monomer may be a perfluoroalkyl vinyl ether.

When other monomer units are contained, their total content is preferably from 0.1 to 10 moles, more preferably from 0.1 to 6 moles, particularly preferably from 0.2 to 4 moles, in a molar ratio where the total of TFE units and hexafluoropropylene units is 100 moles.

In ECTFE, the proportion of the content of E units to the total content of E units and chlorotrifluoroethylene units, is preferably from 2 to 98 mol%, more preferably from 10 to 90 mol%, particularly preferably from 30 to 70 mol%.

ECTFE may be a copolymer consisting only of E units and chlorotrifluoroethylene units, or it may contain other monomer units other than these.

A preferred example of another monomer may be a perfluoroalkyl vinyl ether.

When other monomer units are contained, their total content is preferably from 0.1 to 10 moles, more preferably from 0.1 to 5 moles, particularly preferably from 0.2 to 4 moles, in a molar ratio where the total of E units and chlorotrifluoroethylene units is 100 moles.

Particles A may contain low boiling components. Specific examples of low boiling components may be, although not limited to, unreacted monomers among monomers used for polymerization of the specific fluororesin, low molecular weight fluorinated polymers (oligomers, etc.) formed at the time of polymerization for the specific fluororesin, and a polymerization solvent used for polymerization of the specific fluororesin.

The low boiling components that may be contained in particles A will be at least partially removed by the method for producing particles of the present invention.

When particles A contain low boiling components, the content of the low boiling components is preferably more than 0 mass% and at most 0.5 mass%, more preferably more than 0 mass% and at most 0.3 mass%, particularly preferably more than 0 mass% and at most 0.2 mass%, to the total mass of particles A.

The content of low boiling components is calculated by the following formula, based on the mass of particles A before and after treatment, by carrying out the treatment of heating 60 mg of particles A in dry air by raising the temperature from 50°C at a rate of 10°C/min and holding them at a temperature lower by 30°C than the melting point of the specific fluororesin for 30 minutes, by using a differential thermal and thermogravimetric simultaneous analyzer (e.g., a device similar to TG/DTA7200 (manufactured by Hitachi High-Technologies Corporation)).

Content of low boiling components in particles A [mass%] = 100 × (mass of particles A before treatment - mass of particles A after treatment)/mass of particles A before treatment)

The shape of particles A is not particularly limited, and may be any shape such as spherical (including ellipsoidal), columnar (e.g. cylindrical), etc.

The average particle diameter of particles A is preferably from 100 $\mu$m to 10.0 mm, more preferably from 0.5 mm to 10.0 mm, particularly preferably from 0.8 mm to 8.0 mm. When the average particle diameter of particles A is at least the lower limit value in the above range, they are excellent in handling efficiency, and when it is at most the upper limit value, they are excellent in pulverizability.

<Method for producing specific fluororesin>

A method for producing a specific fluororesin may be a known method such as suspension polymerization, solution polymerization, emulsion polymerization or bulk polymerization, and suspension polymerization or solution polymerization is preferred, and solution polymerization is particularly preferred.

As a suitable embodiment for the method for producing a specific fluororesin, a method of polymerizing units based on a fluorinated monomer and units based on a non-fluorinated monomer in the presence of a hydrofluorocarbon or hydrofluoroether, may be mentioned. In the following, the method for producing a specific fluororesin will be described based on this suitable embodiment.

Here, the fluorinated monomer, the non-fluorinated monomer and the specific fluororesin are as described above, and therefore, their explanation is omitted.

The hydrofluorocarbon or the hydrofluoroether is used as a polymerization solvent or a chain transfer agent. The hydrofluorocarbon or hydrofluoroether is superior to a fluorinated solvent containing a chlorine atom, such as a chlorofluorocarbon (CFC) or hydrochlorofluorocarbons (HCFC), in protecting the global environment.

Specific examples of the hydrofluorocarbon may be 1,1,2,2-tetrafluorocyclobutane, $CF_3CFHCF_2CF_2CF_3$, $CF_3(CF_2)_4H$, $CF_3CF_2CFHCF_2CF_3$, $CF_3CFHCFHCF_2CF_3$, $CF_2HCFHCF_2CF_2CF_3$, $CF_3(CF_2)_5H$, $CF_3CH(CF_3)CF_2CF_2CF_3$, $CF_3CF(CF_3)CFHCF_2CF_3$, $CF_3CF(CF_3)CFHCFHCF_3$, $CF_3CH(CF_3)CFHCF_2CF_3$, $CF_3CF_2CH_2CH_3$, and $CF_3(CF_2)_3CH_2CH_3$.

Specific examples of the hydrofluoroether may be $CF_3CH_2OCF_2CF_2H$, $(CF_3)_2CFCF(CF_2CF_3)OCH_3$, $(CF_3)_2CFCF_2OCH_2CH_3$, $(CF_3)_2CFCF_2OCH_3$, $CF_3(CF_2)_3OCH_2CH_3$, $CF_3(CF_2)_3OCH_3$, and $C_3F_7OCH_3$.

The amount of the hydrofluorocarbon or hydrofluoroether to be used as a polymerization solvent is preferably from 20 to 99.99 parts by mass, particularly preferably from 99 to 99.9 parts by mass, to the total mass (100 parts by mass) of the polymerization solvent and chain transfer agent.

The amount of the hydrofluorocarbon or hydrofluoroether to be used as a chain transfer agent is preferably from 0.01 to 80 parts by mass, particularly preferably from 0.1 to 1 part by mass to the total mass (100 parts by mass) of the polymerization solvent and chain transfer agent.

In the polymerization for a specific fluororesin, known components other than the above mentioned monomers, hydrofluorocarbon and hydrofluoroether, may be used, and, for example, a polymerization solvent (e.g. an organic solvent other than the hydrofluorocarbon and hydrofluoroether, or water), a chain transfer agent (a chain transfer agent other than the hydrofluorocarbon and hydrofluoroether, e.g. an alcohol or a hydrocarbon), a polymerization initiator, and a polymerization inhibitor may be mentioned.

As the polymerization conditions for a specific fluororesin (e.g. reaction temperature, reaction time), known conditions may be employed.

<Method for producing particles A>

Particles A may be obtained, for example, by a granulation treatment using a slurry containing a specific fluororesin obtained as described above. The slurry is a solution in which the specific fluororesin is in a suspension state as dissolved or swollen in the above-described polymerization solvent.

The content of the specific fluororesin is, from the standpoint of excellent granulation properties, preferably from 1 to 40 mass%, particularly preferably from 3 to 35 mass%, to the total mass of the slurry.

The content of the polymerization solvent is, from the standpoint of excellent granulation properties, preferably from 60 to 99 mass%, particularly preferably from 65 to 97 mass% to the total mass of the slurry.

The slurry is preferably used as mixed with water since it will be excellent in granulation properties.

In a case where water and the slurry are used as mixed together, the content of water is, from the standpoint of excellent granulation properties, preferably from 100 to 700 parts by mass, particularly preferably from 150 to 550 parts by mass, to 100 parts by mass of the slurry.

As the granulation treatment, any known granulation treatment may be mentioned. A specific example of the granulation treatment may be a treatment of stirring the slurry in a granulation tank. The granulation treatment may be carried out while heating.

The temperature in the granulation treatment (hereinafter referred to also as the "granulation temperature") may be less than the melting temperature of the specific fluororesin, and, specifically, from 10 to 130°C is preferred, and from 20 to 110°C is particularly preferred.

The time for the granulation treatment and the conditions for the stirring (e.g. the number of rotations of stirring blades) are not particularly limited, and may suitably be set in accordance with known conditions.

After the production of particles A and before the specific heat treatment to obtain particles B as described below, it is preferred that particles A are not heated at a temperature exceeding the extrapolated melting initiation temperature of the specific fluororesin contained in particles A. It is thereby possible to prevent melting of a part of particles A, and thus to suppress a decrease in pulverizability that may be caused by a melted part, and, as a result, the particle diameter after pulverization tends to be uniform. Specifically, it is more preferred that the melting and kneading of particles A are not carried out. It is thereby possible to prevent formation of fibrillar pulverized material at the time when particles B will be subjected to pulverization treatment as described later.

[Specific heat treatment]

The specific heat treatment is a treatment of heating particles A at a temperature of at least the midpoint glass transition temperature ($T_{mg}$) and at most the extrapolated melting initiation temperature ($T_{im}$). By this treatment, particles B are obtainable. When the heat treatment is carried out within this heating temperature range, the low boiling components can be effectively removed from particles A for the reasons as described above. In addition, there will be such merits that at the time when the resulting particles B are subjected to pulverization, the pulverization treatment will be easy, and it is possible to suppress formation of fibrillated pulverized material.

The specific heat treatment is carried out at a temperature of at least the midpoint glass transition temperature, but from such a viewpoint that low boiling components can be more effectively removed from particles A, it is preferred to carry out the heat treatment at a temperature higher by at least 10°C than the midpoint glass transition temperature (i.e. $T_{mg}$ + 10 $\leq$ heating temperature of specific heat treatment [°C]), more preferred to carry out the heat treatment at a temperature higher by at least 30°C than the midpoint glass transition temperature (i.e. $T_{mg}$ + 30 $\leq$ heating temperature of specific heat treatment [°C]), and particularly preferred to carry out the heat treatment at a temperature higher by at least 50°C than the midpoint glass transition temperature (i.e. $T_{mg}$ + 50 $\leq$ heating temperature of specific heat treatment [°C]).

The specific heat treatment is carried out at a temperature of at most the extrapolated melting initiation temperature, but from such a viewpoint that low boiling components can be more effectively removed from particles A, it is preferred to carry out the heat treatment at a temperature close to the extrapolated melting initiation temperature, and it is particularly preferred to conduct the heat treatment at the extrapolated melting initiation temperature. Here, a temperature close to the extrapolated melting initiation temperature is meant for, e.g. a temperature within a range of $T_{im}$ - 10 < heating temperature of specific heat treatment [°C] $\leq$ $T_{im}$.

In addition, from such a viewpoint that at the time of subjecting the obtainable particles B to pulverization treatment, the mechanical pulverization treatment will be easier, and at the time of subjecting the obtainable particles B to pulverization treatment, it is possible to better prevent formation of fibrillated pulverized material, it is preferred to conduct the heat treatment at a temperature lower by at least 10°C than the extrapolated melting initiation temperature (i.e. the heating temperature for the specific heat treatment [°C] $\leq$ $T_{im}$ - 10), it is more preferred to conduct the heat treatment at a temperature lower by at least 20°C than the extrapolated melting initiation temperature (i.e. the heating temperature of the specific heat treatment [°C] $\leq$ $T_{im}$ - 20), and it is particularly preferred to conduct the heat treatment at a temperature lower by at least 30°C than the extrapolated melting initiation temperature (i.e. the heating temperature of the specific heat treatment [°C] $\leq$ $T_{im}$ - 30).

Other suitable ranges may be mentioned for the specific heat treatment. For example, the specific heat treatment is conducted preferably at a temperature higher by at least 10°C than the midpoint glass transition temperature and lower by at least 10°C than the extrapolated melting initiation temperature (i.e. $T_{mg}$ + 10 $\leq$ heating temperature of the specific heat treatment [°C] $\leq$ $T_{im}$ - 10), more preferably at a temperature higher by at least 30°C than the midpoint glass transition temperature and lower by at least 20°C than the extrapolated melting initiation temperature (i.e. $T_{mg}$ + 30 $\leq$ heating temperature of specific heat treatment [°C] $\leq$ $T_{im}$ - 20), and particularly preferably at a temperature higher by at least 50°C than the midpoint glass transition temperature and lower by at least 30°C than the extrapolated melting initiation temperature (i.e. $T_{mg}$ + 50 $\leq$ heating temperature of specific heat treatment [°C] $\leq$ $T_{im}$ - 30).

The midpoint glass transition temperature and the extrapolated melting initiation temperature of ETFE vary depending on the contents of the respective units contained in ETFE, etc., but usually, the midpoint glass transition temperature of ETFE is from 40 and 100°C, and the extrapolated melting initiation temperature of ETFE is from 160 and 250°C.

The time for the specific heat treatment (heat treatment time of particles A) is set suitably depending on the heating temperature in the specific heat treatment, but, from such a viewpoint that low boiling components can be more effectively removed from particles A, and at the time of subjecting the obtainable particles B to pulverization treatment, the pulverization treatment becomes to be easy and it is possible to suppress formation of fibrillated pulverized material, from 30 minutes to 10 hours is preferred, from 40 minutes to 6 hours is more preferred, and from 60 minutes to 3 hours is particularly preferred.

The time for the specific heat treatment is, if the heating temperature for the specific heat treatment is lower by at least 40°C than the extrapolated melting initiation temperature, preferably 30 minutes to 10 hours, more preferably from 60 minutes to 5 hours, particularly preferably from 60 minutes to 3 hours.

In the case of a direct heating system such as specific heat treatment hot air drying, if the heating temperature is lower by at least 60°C than the extrapolated melting initiation temperature, the time for the specific heat treatment is preferably from 30 minutes to 10 hours, more preferably from 60 minutes to 8 hours, particularly preferably from 60 minutes to 5 hours. Among them, the hot air drying method, in which hot air passes through particles A, can efficiently remove low boiling components even if the heating temperature is low and the heat treatment time is short.

In the case of an indirect heating method such as a conical dryer, if the heating temperature is lower by at least 60°C than the extrapolated melting initiation temperature, the time for the specific heat treatment is preferably from 1 to 20 hours, more preferably from 5 to 10 hours. In the case of the indirect heating method, even if some of particles A are broken during the specific heat treatment, they are not blown away by the wind as in the case of the direct heating method, and therefore, particles B can be recovered almost in all amount.

The specific heat treatment is, from such a viewpoint that it is possible to better reduce formation of white smoke due to evaporation of low boiling components during molding, and it is possible to obtain a molded product having few foam marks on the surface, preferably carried out so that the percentage reduction in low boiling components before and after specific heat treatment, calculated by the following formula, becomes to be preferably from 20 to 100%, more preferably from 40 to 100%, particularly preferably from 50 to 100%.

$$\text{Percentage reduction in low boiling components before and after specific heat treatment [\%]} = 100 \times (\text{content of low boiling components in particles A} - \text{content of low boiling components in particles B})/(\text{content of low boiling components in particles A})$$

The specific heat treatment can be carried out by using a known heat treatment device. The specific heat treatment may be carried out while stirring particles A, from such a viewpoint that low boiling components can be removed more effectively.

As the heat treatment device, either a direct heating system or indirect heating system may be used. As the direct heating system, it is possible to use a shelf oven (hot air circulation thermostat), a solid phase polymerization device such as a heat treatment tank, or a fluidized bed dryer. As the indirect heating system, it is possible to use a conical dryer such as a vacuum tumble dryer, a paddle dryer, a steam tube dryer, a ribocone, a Nauter mixer or the like. It is also possible to use a direct heating system and an indirect heating system in combination. In addition to the above heating via hot air or jacket, an infrared heater, etc. may also be used.

[Particles B]

Particles B are particles comprising a specific fluororesin, and are obtainable by a specific heat treatment of particles A.

Particles B may contain the above-described low boiling components. However, since at least some of the low boiling components have been removed from particles A by the specific heat treatment, the content is less than the content of low boiling components that can be contained in particles A.

In a case where particles B contain low boiling components, the content of the low boiling components in particles B is preferably from 0 to 0.1 mass%, more preferably from 0 to 0.05 mass%, particularly preferably from 0 to 0.03 mass%, to the total mass of particles B.

The method for calculating the content of low boiling components that can be contained in particles B is the same as the method for calculating the content of low boiling components that can be contained in particles A, except that particles B are used.

The shape and average particle diameter of particles B are not particularly limited and are the same as those of particles A, and therefore, their description is omitted here.

[Pulverization treatment]

The method for producing particles of the present invention may include a pulverization treatment to carry out pulverization of particles B. By this treatment, particles C having a smaller diameter than particles B are obtainable.

Particles B are particles obtained by the above-described specific heat treatment, whereby they can be easily pulverized by the mechanical pulverization treatment, and it is possible to prevent formation of fibrillated pulverized material.

Pulverization is preferably carried out by shearing or cutting. A specific example of a method of using shearing may be a method of carrying out pulverization by applying pressure to particles B and applying a shearing force. A specific example of a method of using cutting may be a method of carrying out pulverization by cutting particles B by means of a cutting tool such as a knife.

Pulverization can be carried out, for example, by a mechanical pulverization treatment of using a pulverizer, etc. The pulverizer may be a turbo mill, a cross-biter mill, a rotor-biter mill, a cutting mill, etc.

The pulverization may be carried out at room temperature or while heating.

[Particles C]

Particles C are particles which are obtainable by the pulverization treatment of particles B and which contain the specific fluororesin.

The average particle diameter of particles C is preferably from 10 to 1,000 $\mu$m, more preferably from 20 to 500 $\mu$m, particularly preferably from 25 to 400 $\mu$m. When the average particle diameter of particles C is at least the lower limit value in the above range, they are excellent in handling efficiency, and when it is at most the upper limit value, they are excellent in surface smoothness after melting.

The apparent density of particles C is preferably from 0.3 to 1.2 g/cm$^3$, more preferably from 0.4 to 1.1 g/cm$^3$, particularly preferably from 0.5 to 1.0 g/cm3. When the apparent density of particles C is at least the lower limit value in the above range, they are excellent in handling efficiency, and when it is at most the upper limit value, they are excellent in surface smoothness.

An aggregate consisting of a large number of particles C is also called a powder, and is used, for example, as a powder coating material in the field of paints.

The powder may contain components other than the fluororesin contained in particles C. An example of components other than fluororesin may be an additive such as a flow improver (e.g. silica, alumina), a reinforcing material (e.g. inorganic filler), a heat stabilizer (e.g. cuprous oxide, cupric oxide, cuprous iodide, cupric iodide), an UV absorber, or an acid-receiving agent (e.g. complex metal oxide, a metal compound). The components other than the fluororesin may be used, for example, as mixed with particles C.

[Method for producing molded product]

The method for producing a molded product of the present invention is a method of melting particles (specifically particles B or particles C) produced by the above-described method for producing particles, at a temperature of at least the melting point of the above specific fluororesin, to obtain a molded product containing the above specific fluororesin.

In the method for producing a molded product of the present invention, particles B obtained via the above-mentioned specific heat treatment or particles C obtained by pulverizing them, are used, whereby it is possible to suppress generation of white smoke during the production of the molded product. Further, a molded product in which foam traces caused by low boiling components, etc. are suppressed can be obtained.

Melting of particles B or particles C can be carried out by using a known device capable of melt kneading. Such a device may be a twin-screw extruder.

The twin-screw extruder preferably has two screws, a barrel containing the two screws, a vacuum vent provided in the barrel, a material feed port provided in the barrel, and a die provided at the downstream end of the barrel.

The twin-screw extruder may be a co-directionally rotating twin-screw extruder wherein two screws passed through a cylinder of a barrel having through holes formed, are rotated in the same direction or a cross-directionally rotating extruder in which two screws are rotated in different directions. As the twin-screw extruder, the co-rotating twin-screw extruder is preferred, since it is excellent in conveyance capacity, melting and kneading capacity, separation (dewatering) capacity, and also it enables continuous processing of a resin, and it is excellent also in efficiency of the treatment process.

The engagement of the two screws may be non-engaging, partial engagement, or full engagement.

The screw may be a screw having a plurality of screw elements mounted on a shaft.

The screw elements preferably have the same cross-sectional shape in the axial perpendicular direction. In screw elements, specific functions arise depending on the number of strips meaning the number of flights, and the torsion angle at which the cross-sectional shape in the axial-rectangular direction rotates around the shaft at the center. As the screw elements, rotary elements, kneading elements and mixing elements may be mentioned depending on their functions.

The rotary elements may be screw elements having a torsion angle for rotating continuously around a shaft at the center and having a conveying capacity.

The kneading elements are screw elements consisting of a plurality of plate-like discs with no torsion angle.

The mixing elements may be screw elements having a notch formed in full flight elements with a forward thread or screw elements having a notch formed in full flight elements with a reverse thread. The mixing elements may or may not be self-cleaning properties.

As the screw of the twin-screw extruder, a screw consisting of a rotary element, a kneading element and a mixing element, is suitably used.

The barrel is preferably one having a structure with multiple barrel blocks connected in series.

In the barrel blocks, it is preferred that a through hole corresponding to the cross-sectional shape of the screw, is formed.

Vacuum venting can further remove low boiling components that may be contained in the specific fluororesin when particles B or particles C are melt-kneaded by the screw of the twin-screw extruder.

A vacuum vent can be installed in a twin-screw extruder, for example, by using a barrel block with an attached vacuum vent. The vacuum vent may be installed in multiple barrel blocks.

The die is preferably one having a structure capable of extruding the specific fluororesin to form strands.

The number of discharge ports in a die may be one or more. As a die, it is preferred to have several to dozens of discharge openings, since multiple strands can be formed and the productivity is good.

The temperature for melt mixing is preferably a temperature higher by from 10 to 150°C, more preferably higher by from 20 to 130°C, particularly preferably higher by from 30 to 100°C, than the melting point of the specific fluororesin.

The melting point of the specific fluororesin in the present invention is the temperature (°C) corresponding to the maximum value of the melting peak of the specific fluororesin by recording the melting peak when the temperature of the specific fluororesin is raised at a rate of 10°C/min using a differential scanning calorimeter (e.g. a device equivalent to DSC7020 (manufactured by Seiko Instruments Inc.)).

The specific fluororesin is discharged from the die of the twin-screw extruder and molded into a desired shape. The shape of the molded product containing the specific fluororesin may be in any form, such as pellets or a film.

In the case of producing pellets as a molded product, the method of extruding the specific fluororesin in a molten state from the die attached to the discharge port of the twin-screw extruder to form strands, and then cutting the strands by a pelletizer to obtain pellets, may be mentioned.

In the case of producing a film as a molded product, a method may be mentioned in which the specific fluororesin in a molten state is extruded from a die attached to the discharge port of a twin-screw extruder and formed into a film. Here, the pellets obtained in the above manner may be used to produce the film.

In the foregoing, a method of obtaining a molded product by melting particles B or particles C in a twin-screw extruder has been described, but a molded product may also be produced by the following method.

For example, in a case where a powder composed of a large number of particles C is used as a powder coating material, the powder may be coated (e.g. electrostatically) on a substrate to form a coating layer composed of the powder, and then the coating layer may be melted by heating to form a coating film (a form of molded product) on the substrate.

EXAMPLES.

In the following, the present invention will be described in detail with reference to Examples. However, the present invention is not limited to these Examples. The amounts of the respective components in the Tables given later are based on mass.

[Proportions of units]

The proportions of the respective units in a fluororesin were calculated from data measured by the melt NMR analysis, the fluorine content analysis and the infrared absorption spectrum analysis.

[Midpoint glass temperature and extrapolated melting initiation temperature]

The midpoint glass temperature and the extrapolated melting initiation temperature of a fluororesin were obtained based on a DSC curve measured by using a differential scanning calorimeter (DSC7020, manufactured by Seiko Instruments Inc.) in accordance with the method of JIS K7121 (1987).

[Melting point]

Using a differential scanning calorimeter (DSC7020, manufactured by Seiko Instruments Inc.), the melting peak of a fluororesin was recorded at the time when the temperature of the fluororesin was raised at a rate of 10°C/min, whereby the temperature (°C) corresponding to the maximum value of the melting peak of the fluororesin was determined, and this value was adopted as the melting point of the fluororesin.

[Content of low boiling components]

Using a differential thermal and thermogravimetric simultaneous analyzer (TG/DTA7200, manufactured by Hitachi High-Technologies Corporation), 60 mg of particles (particles containing a fluororesin) were treated by heating in dry air at a rate of 10°C/min from 50°C and maintaining the fluororesin at 230°C for 30 minutes, whereby based on the mass of the particles before and after the treatment, it was calculated by the following formula.

Content of low boiling components in particles [mass%] = 100 × (mass of particles before treatment - mass of particles after treatment)/mass of particles before treatment)

[Percentage reduction in low boiling components before and after heat treatment]

Percentage reduction in low boiling components in particles before and after heat treatment [%] = 100 × (Content of low boiling components contained in particles before heat treatment - Content of low boiling components contained in particles after heat treatment)/Content of low boiling components contained in particles before heat treatment)

[Average particle diameter]

The particles were dispersed in an aqueous solution of 0.1 mass% surfactant (Newcol 1308FA(90), manufactured by Nippon Nyukazai Co., Ltd.), and the median diameter on a volume basis was measured by using a laser diffraction scattering particle distribution analyzer (LA-920, manufactured by HORIBA, Ltd.).

[Apparent density]

The apparent density of particles was measured in accordance with JIS K6819.

[Heap test]

In a rectangular mold frame of 2 cm × 5 cm placed on a glass slide, particles after pulverization in an Example or Comparative Example were filled so that the film thickness after baking became to be approximately 200 $\mu$m. After the mold frame was gently removed, the coating film was baked at 300°C for 60 minutes in an electric furnace, whereby the foamed state of the coating film after baking was visually observed and evaluated in accordance with the following standards. The results are shown in Table 1.

⊚: No foam traces were observed at all.
○: Almost no foam traces were observed.
x: Foam traces were observed on the entire surface.

[Fibrillation test]

Each particle after pulverization was observed visually and evaluated in accordance with the following standards.

Yes: Fibrillated
No: Not fibrillated

[Production of particles A1 containing fluororesin 1]

The inside of a polymerization tank having an internal volume of 430 L and equipped with a stirrer, was degassed. Into the polymerization tank, 418.2 kg of $CF_3(CF_2)_5H$, 2.12 kg of PFBE and 3.4 kg of methanol were put, and the temperature was raised to 66°C with stirring. A gas mixture of TFE/ethylene = 84/16 (molar ratio) was introduced into the polymerization tank until the pressure in the polymerization tank reached 1.5 MPa [gauge]. Into the polymerization tank A, a solution having 26 g of a $CF_3(CF_2)_5H$ solution of 50 mass% tert-butyl peroxypivalate and 4,974 g of $CF_3(CF_2)_5H$ mixed, was injected to start the polymerization. During the polymerization, a gas mixture of TFE/ethylene = 54/46 (molar ratio) and PFBE in an amount equivalent to 1.4 mol% to 100 mol% of the gas mixture, were continuously introduced, so that the pressure in the polymerization chamber became to be 1.5 MPa [gauge]. After charging 34 kg of the gas mixture of TFE/ethylene, the polymerization tank was cooled, and the residual gas was purged to terminate the polymerization. In this way, a slurry containing fluororesin 1 was obtained. Here, fluororesin 1 was a melt moldable resin.

The slurry in the polymerization tank was transferred to an 850 L granulation tank, 340 L of water was added, and the tank was heated at 105°C while stirring, to remove the solvent and unreacted monomers to obtain granules. The granules were dried at 150°C for 5 hours to obtain 34 kg of particles A1 (average particle diameter: 1.6 mm) containing fluororesin 1.

The molar ratio of ethylene-based units to TFE-based units in fluororesin 1 (E units/TFE units) was 45.0/55.0 (molar ratio), and the content of PFBE-based units was 1.7 mol% of all units in the polymer constituting the fluororesin.
Fluororesin 1 had a midpoint glass temperature of 90°C, an extrapolated melting initiation temperature of 240°C and a melting point of 260°C.

[Example 1]

25 kg of particles A1 containing fluororesin 1 was stored in a heat treatment tank (hot air system, manufactured by Osaka Reiken Co., Ltd.), and heat treatment of particles A1 was carried out at 150°C for 1 hour to obtain particles B1 containing fluororesin 1.
Using a turbo mill pulverizer (manufactured by Turbo Kogyo Co., Ltd.), the obtained particles B1 were pulverized to obtain particles C1 containing fluororesin 1.

[Examples 2 to 6, Comparative Examples 1 to 2)

In the same manner as in Example 1, except that the heat treatment conditions (heat treatment temperature and time) for particles A1 were changed as shown in Table 1, particles B2 to B8 after heat treatment and particles C2 to C8 after pulverization treatment were obtained.

[Table 1]

| | Particles before heat treatment | Heat treatment conditions for particles A1 | | Particles after heat treatment | Particles after pulverization | | | Content of low boiling components | | Percentage reduction of low boiling components (%) | Heap test | Fibrillation test |
|---|---|---|---|---|---|---|---|---|---|---|---|---|
| | | Heat treatment temperature (°C) | Heat treatment time (hr) | | Type | Average particle diameter ($\mu$m) | Apparent density (g/cm$^3$) | Particles before heat treatment (mass%) | Particles after heat treatment (mass%) | | | |
| Ex. 1 | A1 | 150 | 1 | B1 | C1 | 243 | 0.69 | 0.169 | 0.087 | 49 | ◎ | No |
| Ex. 2 | A1 | 180 | 1 | B2 | C2 | 255 | 0.68 | 0.169 | 0.051 | 70 | ◎ | No |
| Ex. 3 | A1 | 200 | 1 | B3 | C3 | 252 | 0.69 | 0.169 | 0.022 | 87 | ◎ | No |
| Ex.4 | A1 | 220 | 1 | B4 | C4 | 257 | 0.73 | 0.169 | 0.017 | 89.9 | ◎ | No |
| Ex. 5 | A1 | 240 | 1 | B5 | C5 | 255 | 0.47 | 0.169 | 0.005 | 97 | ◎ | No |
| Ex. 6 | A1 | 240 | 2 | B6 | C6 | 245 | 0.68 | 0.169 | 0.002 | 98.8 | ◎ | No |
| Comp. Ex. 1 | A1 | 245 | 1 | B7 | C7 | - | - | 0.169 | - | - | - | - |
| Comp. Ex. 2 | A1 | 80 | 48 | B8 | C8 | 260 | 0.68 | 0.169 | 0.15 | 11.2 | ○ | No |

[Examples 7 to 14]

20 kg of particles A1 containing fluororesin 1 was put into a vacuum tumble dryer (50 L) manufactured by Nikku Industry Co., Ltd., and at a rotation speed of 10 rpm and under a vacuum of 5 torr, heat treatment was carried out at the temperature and time as shown in Table 2. After the heat treatment, pulverization was conducted in the same manner as in Example 1.

[Table 2]

| | Particles before heat treatment | Heat treatment conditions for particles A1 | | Particles after heat treatment | Particles after pulverization | | | Content of low boiling components | | Percentage reduction of low boiling components (%) | Heap test | Fibrillation test |
|---|---|---|---|---|---|---|---|---|---|---|---|---|
| | | Heat treatment temperature (°C) | Heat treatment time (hr) | | Type | Average particle diameter ($\mu$m) | Apparent density (g/cm$^3$) | Particles before heat treatment (mass%) | Particles after heat treatment (mass%) | | | |
| Ex. 7 | A1 | 180 | 1 | B9 | C9 | 261 | 0.71 | 0.169 | 0.122 | 27.8 | ◎ | No |
| Ex. 8 | A1 | 180 | 6 | B10 | C10 | 258 | 0.68 | 0.169 | 0.57 | 66.3 | ◎ | No |
| Ex. 9 | A1 | 180 | 8 | B11 | C11 | 259 | 0.7 | 0.169 | 0.047 | 72.2 | ◎ | No |
| Ex. 10 | A1 | 180 | 16 | B12 | C12 | 259 | 0.72 | 0.169 | 0.032 | 81.1 | ◎ | No |
| Ex. 11 | A1 | 200 | 1 | B13 | C13 | 260 | 0.69 | 0.169 | 0.123 | 27.2 | ◎ | No |
| Ex. 12 | A1 | 200 | 6 | B14 | C14 | 257 | 0.72 | 0.169 | 0.042 | 75.1 | ◎ | No |
| Ex. 13 | A1 | 200 | 8 | B15 | C15 | 259 | 0.7 | 0.169 | 0.037 | 78.1 | ◎ | No |
| Ex. 14 | A1 | 220 | 1 | B16 | C16 | 261 | 0.68 | 0.169 | 0.074 | 56.2 | ◎ | No |

[Examples 15 to 17]

Using a batch-type fluidized-bed dryer (B-FBD) manufactured by Nara Machinery Co., Ltd., 15 kg of particles A1 containing fluororesin 1 was heat-treated at a heat treatment temperature of 200°C and for the time shown in Table 3. After the heat treatment, pulverization was conducted in the same manner as in Example 1.

[Table 3]

| | Particles before heat treatment | Heat treatment conditions for particles A1 | | Particles after heat treatment | Particles after pulverization | | | Content of low boiling components | | Percentage reduction of low boiling components (%) | Heap test | Fibrillation test |
|---|---|---|---|---|---|---|---|---|---|---|---|---|
| | | Heat treatment temperature (°C) | Heat treatment time (hr) | | Type | Average particle diameter ($\mu$m) | Apparent density (g/cm$^3$) | Particles before heat treatment (mass %) | Particles after heat treatment (mass%) | | | |
| Ex. 15 | A1 | 200 | 1 | B17 | C17 | 255 | 0.68 | 0.169 | 0.061 | 63.9 | ◎ | No |
| Ex. 16 | A1 | 200 | 3 | B18 | C18 | 261 | 0.7 | 0.169 | 0.027 | 84.0 | ◎ | No |
| Ex. 17 | A1 | 200 | 5 | B19 | C19 | 260 | 0.67 | 0.169 | 0.008 | 95.3 | ◎ | No |

EP 3 904 428 A1

[Examples 18 to 21]

Using a compact hot air circulation type incubator TRO-52DPA manufactured by Kato, 15 kg of particles A1 containing fluororesin 1 were heat-treated at the hot air temperature and time as shown in Table 4. After the heat treatment, pulverization was conducted in the same manner as in Example 1.

[Table 4]

| | Particles before heat treatment | Heat treatment conditions for particles A1 | | Particles after heat treatment | Particles after pulverization | | | Content of low boiling components | | Percentage reduction of low boiling components (%) | Heap test | Fibrillation test |
| | | Heat treatment temperature (°C) | Heat treatment time (hr) | | Type | Average particle diameter ($\mu$m) | Apparent density (g/cm$^3$) | Particles before heat treatment (mass%) | Particles after heat treatment (mass%) | | | |
|---|---|---|---|---|---|---|---|---|---|---|---|---|
| Ex. 18 | A1 | 180 | 1 | B20 | C20 | 259 | 0.72 | 0.169 | 0.095 | 43.8 | ◎ | No |
| Ex. 19 | A1 | 180 | 8 | B21 | C21 | 262 | 0.69 | 0.169 | 0.032 | 81.1 | ◎ | No |
| Ex. 20 | A1 | 200 | 1 | B22 | C22 | 263 | 0.7 | 0.169 | 0.052 | 69.2 | ◎ | No |
| Ex. 21 | A1 | 220 | 1 | B23 | C23 | 257 | 0.68 | 0.169 | 0.035 | 79.3 | ◎ | No |

[Example 22]

With respect to particles C1 to C6 and C9 to C21, lining tests were conducted under the following conditions, whereby it was confirmed that the white smoke derived from low boiling components was significantly reduced as compared to particles C8.

Lining test: Carried out by using a rock-and-roll method. The particles were fed into a steel pipe of 20 mm in outer diameter, and lining was conducted by direct heating. After expiration of a predetermined period of time, a part of the flange was opened and white smoke derived from low boiling components was observed visually.

As shown in Tables 1 to 4, it was confirmed that particles containing melt-moldable fluororesins are excellent in removability of low boiling components, if they are heat-treated at a temperature of at least the midpoint glass transition temperature and at most the extrapolated melting initiation temperature (Examples 1 to 21).

In contrast, when particles containing a melt-moldable fluororesin were heat-treated at a temperature exceeding the extrapolated melting initiation temperature, the particles fused one another and could not be pulverized, whereby various evaluations could not be conducted (Comparative Example 1).

Further, when particles containing a melt-moldable fluororesin were heat-treated at a temperature below the midpoint glass transition temperature, it was confirmed that the removal of low boiling components was inferior (Comparative Example 2).

The entire disclosures of Japanese Patent Application No. 2018-245705 filed on December 27, 2018 and Japanese Patent Application No. 2019-168193 filed on September 17, 2019 including specifications, claims and summaries are incorporated herein by reference in their entireties.

**Claims**

1. A method for producing particles, **characterized by** heat-treating particles A comprising a melt-moldable fluororesin at a temperature of at least the midpoint glass transition temperature and at most the extrapolated melting initiation temperature to obtain particles B comprising the fluororesin.

2. The method for producing particles according to Claim 1, **characterized in that** the temperature for the heat treatment is a temperature higher by at least 10°C than the midpoint glass transition temperature and lower by at least 10°C than the extrapolated melting initiation temperature.

3. The method for producing particles according to Claim 1 or 2, wherein the time for the heat treatment is from 30 minutes to 10 hours.

4. The method for producing particles according to any one of Claims 1 to 3, wherein the fluororesin is obtained by polymerizing a fluorinated monomer and a non-fluorinated monomer in the presence of a hydrofluorocarbon or hydrofluoroether.

5. The method for producing particles according to Claim 4, wherein the fluorinated monomer is at least one member selected from the group consisting of tetrafluoroethylene, hexafluoropropylene, perfluoro(alkyl vinyl ether), chlorotrifluoroethylene, vinylidene fluoride and vinyl fluoride, and
   the non-fluorinated monomer is at least one member selected from the group consisting of ethylene, propylene, itaconic anhydride and vinyl acetate.

6. The method for producing particles according to any one of Claims 1 to 5, wherein the fluororesin is any of a copolymer containing units based on tetrafluoroethylene and units based on ethylene, a copolymer containing units based on chlorotrifluoroethylene and units based on ethylene, a copolymer containing units based on tetrafluoroethylene and units based on perfluoro(alkyl vinyl ether), and a copolymer containing units based on tetrafluoroethylene and units based on hexafluoropropylene.

7. The method for producing particles according to any one of Claims 1 to 6, wherein the fluororesin is a copolymer containing units based on tetrafluoroethylene and units based on ethylene, and the copolymer further contains monomer F1 represented by the following formula (F1):

$$CH_2=CX(CF_2)_nY \qquad (F1)$$

wherein X and Y are each independently a hydrogen atom or a fluorine atom, and n is an integer from 2 to 8.

8. The method for producing particles according to any one of Claims 1 to 7, wherein the average particle diameter of particles A is from 100 $\mu$m to 10.0 mm.

9. The method for producing particles according to any one of Claims 1 to 8, wherein particles A contain low boiling components, and the content of the low boiling components is more than 0 mass% and at most 0.5 mass% to the total mass of particles A.

10. The method for producing particles according to Claim 9, wherein the percentage reduction in low boiling components before and after heat treatment, calculated by the following formula by using the contents of low boiling components in particles A and particles B, is from 20 to 100%:

Percentage reduction in low boiling components before and after heat treatment [%] = 100 × (content of low boiling components in particles A - content of low boiling components in particles B)/(content of low boiling components in particles A)

11. The method for producing particles according to any one of Claims 1 to 10, wherein particles B are subjected to pulverization treatment to obtain particles C.

12. The method for producing particles according to Claim 11, wherein the average particle diameter of particles C obtained by pulverization treatment of particles B is from 10 to 1,000 $\mu$m.

13. The method for producing particles according to Claim 11 or 12, wherein the apparent density of particles C obtained by pulverization treatment of particles B is from 0.3 to 1.2 g/cm3.

14. A method for producing a molded product, **characterized by** melting the particles produced by the production method in any one of Claims 1 to 13, at a temperature of at least the melting point of the fluororesin, to obtain a molded product containing the fluororesin.

## INTERNATIONAL SEARCH REPORT

| International application No. |
| --- |
| PCT/JP2019/051019 |

### A. CLASSIFICATION OF SUBJECT MATTER

Int. Cl. C08J3/12(2006.01)i, C08F214/18(2006.01)i
FI: C08J3/12 Z CEW, C08F214/18

According to International Patent Classification (IPC) or to both national classification and IPC

### B. FIELDS SEARCHED

Minimum documentation searched (classification system followed by classification symbols)
Int. Cl. C08J3/00-3/28, C08J99/00, C08F6/00-246/00, C08F301/00

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2013/005743 A1 (ASAHI GLASS CO., LTD.) 10 January 2013, claims, paragraphs [0016], [0024], [0027]-[0029], [0041], table 1, examples, examples 3, 4, claims, paragraphs [0016], [0024], [0027]-[0029], [0041], table 1, examples, examples 3-4 | 1-10, 14 |
| Y |  | 11-13 |
| A | WO 2016/199681 A1 (ASAHI GLASS CO., LTD.) 15 December 2016, paragraph [0051] | 1-2 |
| Y | WO 2013/012036 A1 (ASAHI GLASS CO., LTD.) 24 January 2013, paragraphs [0049]-[0051], examples | 11-13 |
| Y | JP 2003-2979 A (DAIKIN INDUSTRIES, LTD.) 08 January 2003, paragraphs [0038], [0039], examples | 11-13 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 03.03.2020 | 17.03.2020 |

| Name and mailing address of the ISA/ Japan Patent Office 3-4-3, Kasumigaseki, Chiyoda-ku, Tokyo 100-8915, Japan | Authorized officer |
| --- | --- |
|  | Telephone No. |

Form PCT/ISA/210 (second sheet) (January 2015)

**INTERNATIONAL SEARCH REPORT**

| International application No. |
| --- |
| PCT/JP2019/051019 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 4-154842 A (DAIKIN INDUSTRIES, LTD.) 27 May 1992, entire text, all drawings | 1-14 |

Form PCT/ISA/210 (continuation of second sheet) (January 2015)

**INTERNATIONAL SEARCH REPORT**

Information on patent family members

| International application No. |
|---|
| PCT/JP2019/051019 |

| Patent Documents referred to in the Report | Publication Date | Patent Family | Publication Date |
|---|---|---|---|
| WO 2013/005743 A1 | 10.01.2013 | US 2014/0121331 A1 claims, paragraphs [0040], [0049], [0052]-[0057], [0069], table 1, examples, examples 3, 4<br>EP 2730605 A1<br>CN 103635517 A | |
| WO 2016/199681 A1 | 15.12.2016 | US 2018/0047379 A1 paragraph [0112], [0113]<br>CN 107615374 A | |
| WO 2013/012036 A1 | 24.01.2013 | US 2014/0135465 A1 paragraph [0099], [0100], examples<br>EP 2735582 A1<br>CN 103687898 A | |
| JP 2003-2979 A | 08.01.2003 | (Family: none) | |
| JP 4-154842 A | 27.05.1992 | US 5324785 A entire text, all drawings<br>EP 481509 A2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017209133 A
- JP 2018245705 A
- JP 2019168193 A